# FASCICULE DE BREVET EUROPEEN

(11) **EP 0 746 652 B1**
(45) Date de publication et mention de la délivrance du brevet: **22.07.1998**
(21) Numéro de dépôt: 95911354.9
(22) Date de dépôt: 28.02.1995
(51) Int. Cl.: E01B 29/28

(54) **DISPOSITIF DE FIXATION D'UNE LAME METALLIQUE EN APPUI CONTROLE SUR UN SUPPORT**
VORRICHTUNG ZUR BEFESTIGUNG EINES METALLSTREIFENS AUF EINER UNTERLAGE MIT KONTROLLIERTEM DRUCK
DEVICE FOR CONTROLLABLY FASTENING A METAL STRIP ONTO A SUPPORT

(30) Priorité: 01.03.1994 FR 9402323
(43) Date de publication de la demande: 11.12.1996
(73) Titulaire: ALLEVARD, F-92210 Saint-Cloud (FR); MATISA MATERIEL INDUSTRIEL S.A., CH-1023 Crissier (CH); Rouaud, Charles, 92310 Sèvres (FR)
(72) Inventeur: ROUAUD, Charles, F-92310 Sèvres (FR); CAILLIAU, Joel, F-59155 Faches-Thumesnil (FR); BERGA, Jaime, CH-1022 Chavannes (CH)
(74) Mandataire: Busnel, Jean-Benoît
(86) Numéro de dépôt international: FR9500232
(87) Numéro de publication internationale: WO9523893

(56) Documents cités:
- DE-A- 1 708 657
- FR-A- 2 587 048
- US-A- 4 215 636
- US-A- 5 040 827

## Description

La présente invention concerne un dispositif de fixation d'une lame métallique déformable en appui contrôlé sur un support associant des moyens de fixation et des moyens de contrôle.

Elle s'applique en particulier au contrôle de la fixation des lames métalliques destinées à attacher les rails de chemin de fer sur les traverses. La lame d'attache a généralement au repos un profil cintré et elle possède un orifice central par lequel passe la tige filetée d'un boulon tire-fond. Lors du serrage du tire-fond par vissage d'un écrou sur la tige du boulon, la lame se déforme en s'aplatissant en appui sur la base du rail tandis que le couple exercé par l'outil de serrage sur le tire-fond croît au fur et à mesure que la lame est écrasée.

Il existe déjà des dispositifs permettant que lorsque le couple nominal est atteint, l'outil débraye. Cependant, comme le couple de serrage dépend, d'une part, de la géométrie et de l'état de surface du filetage du boulon tire-fond et/ou du taraudage de l'écrou et, d'autre part, de la nature et de l'état du matériau qui reçoit le tire-fond (bois, béton, plastique.....), il est fréquent qu'un débrayage prématuré se produise. Dans ces conditions, il est nécessaire de faire effectuer par un opérateur, un contrôle a posteriori en mesurant la flèche de la lame après serrage. Le cas échéant, il faudra réaliser une reprise du vissage des tire-fonds pour les lames insuffisamment serrées en vue d'obtenir une fixation satisfaisante, ce qui engendre des pertes de temps et un surcoût non négligeable.

La présente invention a pour but de résoudre les problèmes techniques précédents en mesurant directement et de façon continue pendant le serrage la valeur de la déformation de la lame et en asservissant le serrage à cette mesure.

Ce but est atteint au moyen d'un dispositif de fixation d'une lame métallique déformable comprenant des moyens de déformation par serrage de ladite lame en appui contrôlé sur un support et des moyens de contrôle de la déformation, caractérisé en ce que lesdits moyens de déformation sont asservis aux moyens de contrôle qui comprennent au moins une unité de mesure d'un signal proportionnel à la déformation constituée d'un élément fixe et d'un élément mobile chacun étant solidaire d'au moins un doigt d'appui destiné à venir en contact permanent avec la lame pour produire sous l'action des moyens de déformation un déplacement relatif desdits éléments fixe et mobile; la valeur dudit signal étant contrôlée en vue de réduire progressivement le couple de serrage des moyens de déformation.

L'élément fixe de cette unité de mesure est constitué d'un capteur à effet Hall placé dans l'entrefer d'un circuit magnétique porté par l'élément mobile. Ce circuit est constitué de deux aimants permanents de polarités opposées. La position relative du capteur par rapport aux pôles des aimants exprime alors la déformation de la lame. La fonction de transfert est une tension continue.

Selon une caractéristique avantageuse, ledit capteur est pourvu d'une plaquette sétendant horizontalement entre les deux aimants disposés verticalement.

Selon une autre caractéristique avantageuse, ledit capteur fixe est solidaire de deux doigts d'appui symétriques positionnés pour venir en contact avec des zones de référence correspondant à une déformation nulle de lame.

Selon encore une autre caractéristique, ledit circuit magnétique est solidaire d'un doigt d'appui mobile verticalement et positionné pour venir en contact avec une zone de déformation maximum de la lame.

Selon un mode de réalisation particulier, lesdits moyens de déformation sont constitués d'un outil de vissage agissant sur un organe de serrage constitué d'un boulon tire-fond sur lequel est vissé un écrou qui vient en appui sur la face supérieure de la lame.

Selon encore d'autres caractéristiques, le dispositif comporte en outre un manchon monté sur le mandrin de l'outil de vissage et destiné à supporter le bâti de ladite unité de mesure.

Le manchon est avantageusement pourvu dans sa partie supérieure d'un ressort de rappel hélicoïdal permettant un déplacement vertical dudit manchon entre deux positions extrêmes délimitées par la course d'un ergot à l'intérieur d'une rainure de clavette ménagée sur le mandrin.

Dans sa partie inférieure, le manchon est relié au bâti par un organe élastiquement déformable.

De plus, ledit capteur et ses doigts d'appui sont portés par le bâti .

Par ailleurs, ledit circuit magnétique et son doigt d'appui sont solidaires d'au moins une bride montée sur un arbre vertical coulissant en partie haute dans un palier de liaison avec le bâti en étant rappelé vers le bas par un ressort hélicoïdal.

Pour éviter toute rotation de l'élément actif, ledit arbre est rendu solidaire d'une tige verticale coulissant dans ule palier de liaison précédent.

Selon une autre variante de réalisation, le dispositif comporte deux unités de mesure montées de part et d'autre des moyens de déformation.

Les unités de mesure sont intégrées aux moyens de déformation tels qu'un outil de vissage et permettent ainsi un contrôle direct et in situ pendant le serrage automatique. Dans le cas de la fixation de rails, le serrage se fait de préférence en alternant les serrages des attaches intérieures et extérieures du rail et la structure du dispositif de l'invention permet de respecter cet ordre sans pivoter l'outil tout en simplifiant ces opérations.

De plus, grâce au dispositif de l'invention, le serrage devient fiable en s'affranchissant à la fois des caractéristiques de la lame et de celle du tire-fond.

L'invention sera mieux comprise à la lecture de la description qui va suivre en référence aux dessins sur lesquels :
- la figure 1 représente une vue de face en coupe verticale partielle du dispositif de l'invention ; et
- la figure 2 représente une vue de profil en coupe verticale partielle du dispositif de l'invention.

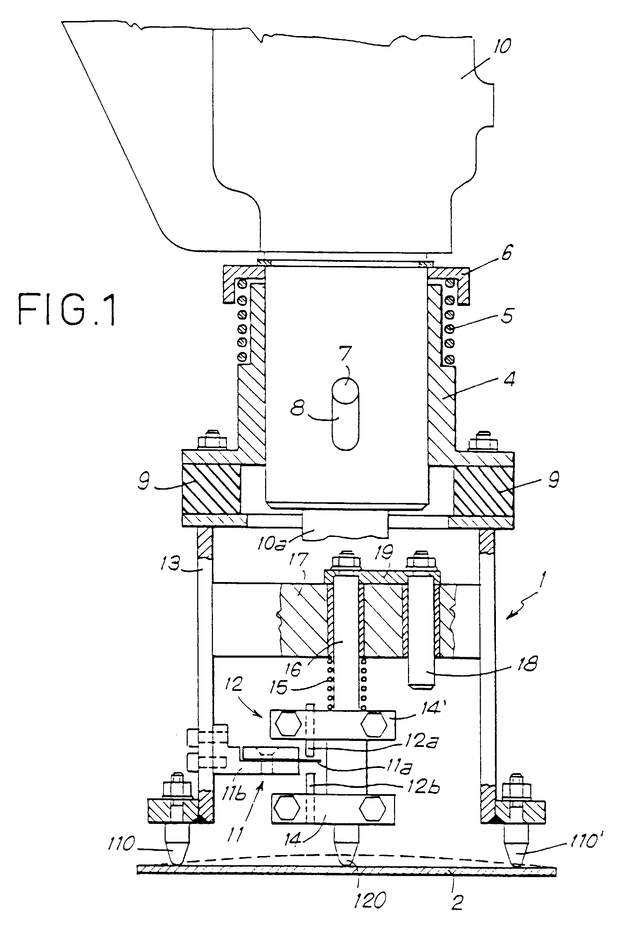

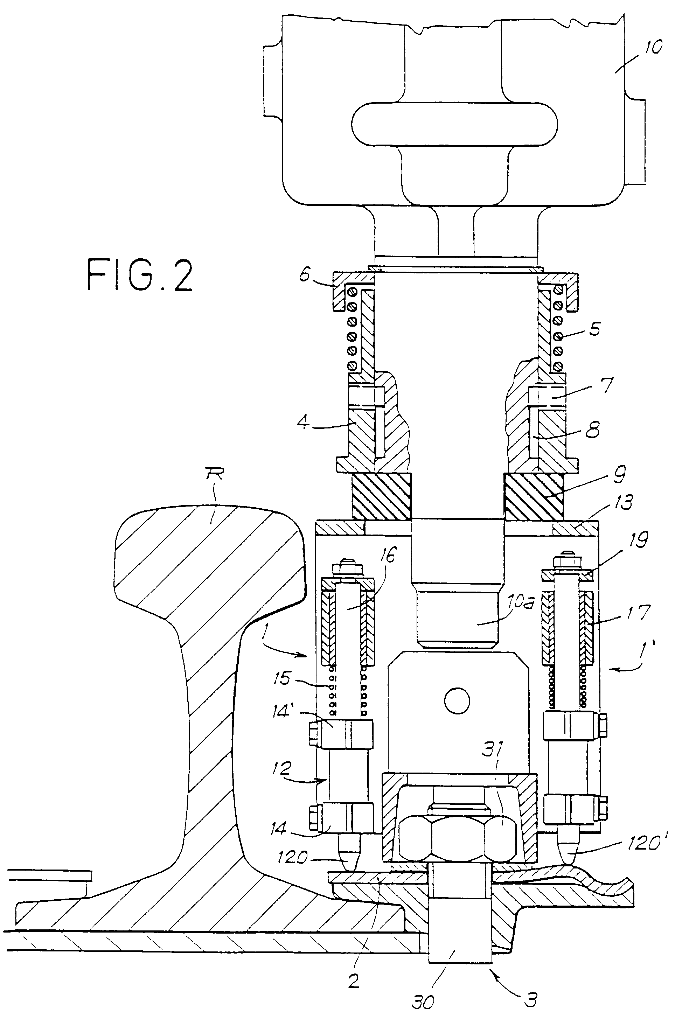

Le dispositif représenté sur les figures 1 et 2 est destiné à assurer la fixation d'une lame métallique 2 déformable en appui vertical contre la base d'un rail R. Il comprend des moyens de déformation tel qu'un outil de vissage 10, un organe de serrage 3 qui sont asservis à des moyens de contrôle. L'organe de serrage 3 comporte un boulon tire-fond 30 traversant la lame 2 et un écrou 31 vissé sur la tête du boulon 30 et venant en appui sur la face supérieure de la lame.

La lame 2 avant serrage est représentée en traits interrompus sur la figure 1.

Sur cette figure, l'outil de vissage 10 a été représenté avec arrachement de son mandrin 10a.

Les moyens de contrôle comprennent au moins un et de préférence deux unités de mesure 1, 1' permettant la mesure directe, continue et automatique d'un signal proportionnel à la déformation de la lame 2 et principalement de sa flèche pendant le vissage de l'organe de serrage 3. Ce signal est transmis à un ensemble de trois comparateurs avec des seuils de déclenchement échelonnés correspondant à des séquences de travail de l'outil de vissage 10 par exemple : un serrage à vitesse rapide suivi d'un serrage lent et enfin d'un arrêt de serrage.

Comme représenté sur la figure 1, l'unité de mesure 1 comprend un élément fixe constitué d'un capteur 11 disposé dans un champ magnétique créé à partir d'un circuit magnétique porté par un élément mobile 12. Le capteur 11 est un capteur à effet Hall qui comporte une plaquette 11a reliée à un circuit électrique (non représenté). La plaquette 11a est destinée à se déplacer de manière relative dans l'entrefer compris entre les deux aimants permanents 12a, 12b de polarités opposées qui constituent l'élément mobile 12. Chacun des éléments fixe 11 et mobile 12 est solidaire d'au moins un doigt d'appui 110,110', 120 formant palpeur et destiné à venir en contact permanent avec la lame 2 pour produire sous l'action de l'outil de vissage un déplacement relatif de l'élément mobile 12 par rapport à l'élément fixe 11. Ce déplacement induit une variation proportionnelle de signal électrique aux bornes du capteur. Ce signal est contrôlé de façon continue, traité et comparé à des valeurs de consigne avant d'être envoyé à l'outil 10 en vue de diminuer progressivement son couple de serrage. Le déplacement relatif de l'élément mobile 12 par rapport à l'élément fixe 11 correspond donc à l'amplitude de la déformation de la lame. Toutefois, cela n'est réalisé qu'à la condition que les doigts d'appui 110 de l'élément fixe 11 soient positionnés pour venir en contact avec des zones de référence de la lame 2, c'est-à-dire les zones où la déformation est nulle tandis que le doigt d'appui 120 de l'élément mobile 12 sera positionné pour venir en contact avec une zone où la déformation est maximum. Bien entendu, il est possible d'inverser cette configuration et de rendre le capteur mobile tandis que le circuit magnétique sera immobilisé. En général, la zone de déformation maximum pour une lame cintrée du type de celle qui est représentée sur les figures correspond sensiblement à la ligne médiane tandis que la zone de référence correspond aux bords latéraux de ladite lame. De préférence, on prévoit de rendre l'élément fixe 11 solidaire de deux doigts d'appui symétriques 110, 110' disposés latéralement de part et d'autre du doigt d'appui 120 de l'élément mobile 12. L'extrémité inférieure des doigts d'appui 110, 110', 120 est réalisée avec un profil arrondi de façon à assurer un positionnement stable du dispositif sur la lame 2.

Le dispositif de l'invention comporte en outre un manchon 4 monté sur le mandrin 10a de l'outil 10 et destiné à supporter le bâti 13 des capteurs 1, 1'.

Le manchon 4 est pourvu dans sa partie supérieure d'un ressort de rappel hélicoïdal 5 qui prend appui sur un flasque 6 de l'outil 10. Le ressort 5 maintient ainsi le manchon 4 dans une position basse sur le mandrin 10a, tout en permettant un déplacement vertical du manchon vers le haut par appui des doigts 110, 120 contre la lame 2. Ce déplacement s'effectue entre deux positions extrêmes délimitées par la course d'un ergot 7 ou d'une vis à tétons solidaire de la paroi interne du manchon 4 et qui coulisse dans une rainure de clavette 8 réalisée sur le mandrin 10a.

La liaison entre la partie inférieure du manchon 4 et le bâti 13 de l'unité de mesure est assurée par un organe élastiquement déformable 9 tel qu'un Silentbloc ou une entretoise.

L'élément fixe 11 et les doigts d'appui 110, 110' sont portés par le bâti 13. La plaquette 11a s'étend horizontalement et est reliée au bâti 13 en étant fixée sur un support 11b. L'élément mobile 12 et le doigt d'appui 120 sont solidaires d'au moins une et de préférence deux brides symétriques 14, 14' qui maintiennent aussi les aimants 12a, 12b du circuit magnétique dans des positions verticales alignées à une distance déterminée l'un par rapport à l'autre.

Les brides 14, 14' s'étendent horizontalement en étant montées sur un arbre vertical 16 coulissant en partie haute dans un palier de liaison 17 avec le bâti 13 en étant rappelé vers le bas par un ressort hélicoïdal 15. Pour éviter toute rotation de l'arbre 16, ce dernier est rendu solidaire par une entretoise horizontale 19 d'une tige verticale 18 coulissant également dans le palier de liaison 17.

La combinaison entre le ressort 5 du manchon 4 et le ressort 15 de l'arbre 16 assure un contact d'appui permanent des doigts 110, 110', 120 sur la lame 2, toute en laissant une liberté en translation verticale de l'élément mobile 12 par rapport à l'élément fixe 11.

On utilisera de préférence un ressort 15 dont la raideur est moins élevée que celle du ressort 5. Le ressort 15 assurant à lui seul un amortissement du dispositif au contact de la lame 2.

Lors de l'opération de serrage de l'écrou 31 sur le boulon 30, la lame 2 se déforme élastiquement. Cette déformation est suivie en permanence par le doigt 120 qui descend au contact de la lame 2 en étant poussé par l'arbre 16 et le ressort 15. Le déplacement du doigt 120 vers le bas entraîne la descente des brides 14, 14' avec les aimants 12a, 12b ce qui fait varier la distance séparant l'aimant 12a ou 12b de la plaquette 11a du capteur fixe.

Le déplacement du champ magnétique créé par les aimants 12a, 12b de polarités opposées est transformé en une variation de courant électrique aux bornes de la plaquette 11a selon une plage de mesure linéaire du capteur 11. Pour une amplitude de déformation de la lame 2 d'environ 4 mm, on réalise un circuit magnétique dont l'entrefer est de 7 mm. La variation proportionnelle du signal électrique recueilli aux bornes de la plaquette 11a est alors comprise entre 2 et 5 V (en utilisant un capteur avec amplificateur opérationnel incorporé dans sa plage linéaire). Cette variation permet de piloter automatiquement l'outil de vissage 10 pendant l'opération de serrage de l'écrou 31. En ralentissant la vitesse du vissage quelques instants avant la cote finale souhaitée, on obtient une déformation contrôlée de la lame 2 et un appui satisfaisant sur le rail R.

La figure 2 représente le dispositif de l'invention avec ses deux unités de mesure symétriques 1, 1' disposés de part et d'autre du mandrin 10a de l'outil de vissage 10. Cette configuration permet d'effectuer les opérations de serrage de chaque côté du rail R sans qu'il soit nécessaire de faire pivoter le dispositif, les unités 1, 1' avec leur capteur 11, 11' et leur circuit magnétique 12, 12' travaillant l'un sur le côté intérieur, l'autre sur le côté extérieur du rail.

## Revendications

1. Dispositif de fixation d'une lame métallique déformable (2) comprenant des moyens de déformation par serrage de ladite lame en appui contrôlé sur un support et des moyens de contrôle de la déformation, caractérisé en ce que lesdits moyens de déformation sont asservis aux moyens de contrôle qui comprennent au moins une unité de mesure (1, 1') d'un signal proportionnel à la déformation constituée d'un élément fixe (11) et d'un élément mobile (12), chacun étant solidaire d'au moins un doigt d'appui (110, 110', 120) destiné à venir en contact permanent avec la lame (2) pour produire sous l'action des moyens de déformation un déplacement relatif desdits éléments fixe (11) et mobile (12); la valeur dudit signal étant contrôlée en vue de réduire progressivement le couple de serrage des moyens de déformation.

2. Dispositif selon la revendication 1, caractérisé en ce que ledit élément fixe (11) est constitué d'un capteur à effet Hall placé dans l'entrefer d'un circuit magnétique porté par l'élément mobile (12).

3. Dispositif selon la revendication 2, caractérisé en ce que ledit capteur (11) est pourvu d'une plaquette (11a) s'étendant horizontalement dans l'entrefer du circuit magnétique constitué de deux aimants permanents (12a,12b) de polarités opposées portés verticalement par l'élément mobile (12).

4. Dispositif selon l'une des revendications précédentes, caractérisé en ce que l'élément fixe (11) est solidaire de deux doigts symétriques d'appui (110, 110') positionnés pour venir en contact avec des zones de référence correspondant à une déformation nulle de lame (2).

5. Dispositif selon l'une des revendications précédentes, caractérisé en ce que l'élément mobile (12) est solidaire d'un doigt d'appui (120) mobile verticalement et positionné pour venir en contact avec une zone de déformation maximum de la lame (2).

6. Dispositif l'une des revendications précédentes, caractérisé en ce que lesdits moyens de déformation sont constitués d'un outil de vissage (10) agissant sur un organe de serrage (3) constitué d'un boulon tire-fond (30) sur lequel est vissée un écrou (31) qui vient en appui sur la face supérieure de la lame (2).

7. Dispositif selon l'une des revendications précédentes, caractérisé en ce qu'il comporte en outre un manchon (4) monté sur le mandrin (10a) de l'outil de vissage (10) et destiné à supporter le bâti (13) de ladite unité de mesure (1).

8. Dispositif selon la revendication 7, caractérisé en ce que le manchon (4) est pourvu dans sa partie supérieure d'un ressort de rappel hélicoïdal(5) permettant un déplacement vertical dudit manchon (4) entre deux positions extrêmes délimitées par la course d'un ergot (7) à l'intérieur d'une rainure de clavette (8) ménagée sur le mandrin (10a).

9. Dispositif selon l'une des revendications 7 ou 8, caractérisé en ce que le manchon (4) est relié dans sa partie inférieure au bâti (13) par un organe élastiquement déformable (9).

10. Dispositif selon l'une des revendications 7 à 9, caractérisé en ce que ledit élément fixe (11) et ses doigts d'appui (110, 110') sont portés par le bâti (13) fixé sur la partie inférieure du manchon (4).

11. Dispositif selon l'une des revendications 7 à 10, caractérisé en ce que ledit élément mobile (12) et son doigt d'appui (120) sont solidaires d'au moins une bride (14, 14') montée sur un arbre vertical (16) coulissant en partie haute dans un palier de liaison (17) avec le bâti (13) en étant rappelé vers le bas par un ressort hélicoïdal (15).

12. Dispositif selon la revendication 11, caractérisé en ce que ledit arbre (16) est rendu solidaire d'une tige verticale (18) coulissant dans le palier de liaison (17) de façon à interdire toute rotation de l'élément mobile (12).

13. Dispositif selon l'une des revendications précédentes, caractérisé en ce qu'il comporte deux unités de mesure symétriques (1, 1') montées de part et d'autre des moyens de déformation (10).

## Patentansprüche

1. Vorrichtung zum Befestigen eines verformbaren Metallstreifens (2), welche eine Einrichtung zum Verformen des Streifens in kontrollierter Anlage unter Klemmspannung auf einem Träger und eine Einrichtung zum Kontrollieren der Verformung aufweist, **dadurch gekennzeichnet**, daß die Einrichtung zur Verformung entsprechend der Einrichtung zum Kontrollieren geregelt wird, welche zumindest eine Einheit (1, 1') zum Messen eines zur Verformung proportionalen Signals aufweist, die aus einem feststehenden Element (11) und einem beweglichen Element (12) gebildet ist, von denen jede mit mindestens einem Anlagefinger (110, 110', 120) fest verbunden ist, der dazu bestimmt ist, in laufenden Kontakt mit dem Streifen (2) zu kommen und dadurch unter der Einwirkung der Verformungseinrichtung eine relative Verlagerung des feststehenden (11) und des beweglichen (12) Elements herbeizuführen, wobei der Wert des Signals im Hinblick auf eine fortschreitende Verringerung des Spannmoments der Verformungseinrichtung gesteuert wird.

2. Vorrichtung nach Anspruch 1, dadurch gekennzeichnet, daß das feststehende Element (11) aus einem Halleffekt-Meßfühler besteht, der in den Luftspalt eines auf dem beweglichen Element (12) gelagerten Magnetkreises angeordnet ist.

3. Vorrichtung nach Anspruch 2, dadurch gekennzeichnet, daß der Meßfühler (11) ein Plättchen (11a) aufweist, das horizontal im Luftspalt des Magnetkreises verläuft, welcher aus zwei Permanentmagneten (12a, 12b) entgegengesetzter Polarität besteht, die vertikal auf dem beweglichen Element (12) gelagert sind.

4. Vorrichtung nach einem der vorhergehenden Ansprüche, dadurch gekennzeichnet, daß das feststehende Element (11) mit zwei symmetrischen Stützfingern (110, 110') verbunden ist, die so positioniert sind, daß sie mit Bezugsbereichen in Kontakt gelangen, die einer Verformung des Streifens (2) von Null entsprechen.

5. Vorrichtung nach einem der vorhergehenden Ansprüche, dadurch gekennzeichnet, daß das bewegliche Element (12) fest mit einem vertikal beweglichen Stützfinger (120) verbunden ist, der so positioniert ist, daß er mit einem Bereich größtmöglicher Verformung des Streifens (2) in Kontakt gelangt.

6. Vorrichtung nach einem der vorhergehenden Ansprüche, dadurch gekennzeichnet, daß die Verformungseinrichtung aus einem Schraubwerkzeug (10) besteht, welches auf ein Spannteil (3) einwirkt, welches aus einem Verankerungsbolzen (30) besteht, auf welchen eine Mutter (31) aufgeschraubt ist, die in Anlage gegen die Oberseite des Streifens (2) gelangt.

7. Vorrichtung nach einem der vorhergehenden Ansprüche, dadurch gekennzeichnet, daß sie des weiteren eine auf dem Dorn (10a) des Schraubwerkzeugs (10) angebrachte Hülse (4) aufweist, die zum Abstützen des Rahmens (13) der Meßeinheit (1) bestimmt ist.

8. Vorrichtung nach Anspruch 7, dadurch gekennzeichnet, daß die Hülse in ihrem oberen Abschnitt mit einer Schraubenfeder (5) zur Rückstellung versehen ist, welche eine vertikale Verlagerung der Hülse (4) zwischen zwei Extremstellungen gestattet, die durch die Bahn einer Nase (7) im Inneren einer auf dem Dorn (10a) ausgebildeten Keilnut (8) begrenzt sind.

9. Vorrichtung nach einem der Ansprüche 7 oder 8, dadurch gekennzeichnet, daß die Hülse (4) in ihrem unteren Abschnitt mit dem Rahmen (13) über ein elastisch verformbares Element (9) verbunden ist.

10. Vorrichtung nach einem der Ansprüche 7 bis 9, dadurch gekennzeichnet, daß das feststehende Element (11) und die zugehörigen Stützfinger (110, 110') auf dem Rahmen (13) gelagert sind, der am unteren Abschnitt der Hülse (4) befestigt ist.

11. Vorrichtung nach einem der Ansprüche 7 bis 10, dadurch gekennzeichnet, daß das bewegliche Element (12) und der zugehörige Stützfinger (120) mit mindestens einem Bügel (14, 14') fest verbunden sind, der auf einer vertikalen Achse (16) angebracht ist, die im oberen Bereich eines Lagers (17) zur Verbindung mit dem Rahmen (13) gleitend angeordnet ist und dabei von einer Schraubenfeder (15) nach unten gespannt wird.

12. Vorrichtung nach Anspruch 11, dadurch gekennzeichnet, daß die Achse (16) mit einem vertikalen Stift (18) fest verbunden wird, welcher in dem Verbindungslager (17) in der Weise gleitet, daß jede Drehbewegung des beweglichen Elements (12) unmöglich ist.

13. Vorrichtung nach einem der vorhergehenden Ansprüche, dadurch gekennzeichnet, daß sie zwei symmetrische Meßeinheiten (1, 1') aufweist, die zu beiden Seiten der Verformungseinrichtung (10) angeordnet sind.

## Claims

1. Device for fixing a deformable metal clip (2), the device comprising deformation means for deforming said clip by clamping it with controlled thrust against a support, and monitoring means for monitoring the deformation, the device being characterized in that said deformation means are servo-controlled to the monitoring means which comprise at least one measurement unit (1, 1') providing a signal proportional to the deformation and constituted by a stationary element (11) and by a moving element (12), each element being secured to at least one thrust finger (110, 110', 120) designed to come into permanent contact with the clip (2) to give rise, under the action of the deformation means, to relative displacement of said stationary and moving elements (11, 12); the value of said signal being monitored for the purpose of progressively reducing the tightening torque delivered by the deformation means.

2. Device according to claim 1, characterized in that said stationary element (11) is constituted by a Hall effect sensor placed in the air gap of a magnetic circuit carried by the moving element (12).

3. Device according to claim 2, characterized in that said sensor (11) is provided with a plate (11a) extending horizontally in the air gap of the magnetic circuit which is constituted by two opposite-polarity permanent magnets (12a, 12b) carried vertically by the moving element (12).

4. Device according to one of the preceding claims, characterized in that the stationary element (11) is secured to two symmetrical thrust fingers (110, 110') positioned to come into contact with reference zones that correspond to no deformation of the clip (2).

5. Device according to one of the preceding claims, characterized in that the moving element (12) is secured to a vertically movable thrust finger (120) that is positioned to come into contact with a maximum deformation zone of the clip (2).

6. Device according to one of the preceding claims, characterized in that said deformation means are constituted by a tightening tool (10) acting on a clamping member (3) constituted by an anchor bolt (30) having a nut (31) screwed thereon, which nut bears against the top face of the clip (2).

7. Device according to one of the preceding claims, characterized in that it further includes a sleeve (4) mounted on the chuck (10a) of the tightening tool (10) and designed to support the cage (13) of said measurement unit (1).

8. Device according to claim 7, characterized in that the top portion of the sleeve (4) is provided with a helical return spring (5) enabling said sleeve (4) to move vertically between two extreme positions defined by the stroke of a lug (7) in a keyway groove (8) formed on the chuck (10a).

9. Device according to one of claims 7 or 8, characterized in that the bottom portion of the sleeve (4) is connected to the cage (13) via an elastically deformable member (9).

10. Device according to one of claims 7 to 9, characterized in that said stationary element (11) and its thrust fingers (110, 110') are carried by the cage (13) fixed to the bottom portion of the sleeve (4).

11. Device according to one of claims 7 to 10, characterized in that said moving element (12) and its thrust finger (120) are secured by at least one strap (14, 14') to a vertical shaft (16) whose top portion slides in a connection bearing (17) connecting it to the cage (13), while being urged downwards by a helical spring (15).

12. Device according to claim 11, characterized in that said shaft (16) is secured to a vertical rod (18) that slides in the connection bearing (17) in such a manner as to prevent any rotation of the moving element (12).

13. Device according to one of the preceding claims, characterized in that it includes two symmetrical measurement units (1, 1') mounted on either side of the deformation means (10).
